# EUROPÄISCHE PATENTSCHRIFT

(11) **EP 0 381 835 B1**
(45) Veröffentlichungstag und Bekanntmachung des Hinweises auf die Patenterteilung: **07.07.1993**
(21) Anmeldenummer: 89122446.1
(22) Anmeldetag: 05.12.1989
(51) Int. Cl.: F04B 43/06, F16K 11/07

(54) **Verfahren und Vorrichtung zur Steuerung einer druckluftbetriebenen Doppelmembranpumpe**
Process and device for controlling a pressurised-air-actuated double diaphragm pump
Procédé et dispositif de contrôle une pompe à double membrane actionnée par de l'air pressurisé

(30) Priorität: 12.01.1989 DE 3900718
(43) Veröffentlichungstag der Anmeldung: 16.08.1990
(73) Patentinhaber: KWW DEPA Gesellschaft für Marketing mbH, D-40549 Düsseldorf (DE)
(72) Erfinder:
(74) Vertreter: Hase, Stephan

(56) Entgegenhaltungen:
- CH-A- 458 860
- FR-A- 2 103 982
- FR-A- 2 396 225
- US-A- 4 328 950
- US-A- 4 381 180

## Beschreibung

Die Erfindung betrifft ein Verfahren zur Steuerung der Bewegung des Steuerkolbens eines Luftsteuerventils für eine druckluftbetriebene Doppelmembranpumpe, wobei der Steuerkolben in einem Steuerzylinder mit Zuluftbohrungen und Abluftbohrungen für die Druckluft durch ein Steuermedium, vorzugsweise Steuerluft, zwischen zwei Endstellungen bewegt wird, wobei die Steuerluft im Steuerzylinder über Pilotventile zugeführt wird, von denen jedes jeweils nur in einer Extremstellung der Pumpenmembranen betätigt wird, und wobei der Steuerkolben in jeder seiner beiden Endstellungen einer durch das Steuermedium zu überwindenden Haltekraft ausgesetzt wird.

Gegenstand der Erfindung ist aber auch ein Luftsteuerventil für eine druckluftbetriebene Doppelmembranpumpe, welches nach diesem Verfahren arbeitet.

Druckluftbetriebene Membranpumpen sind besonders geeignet für die problemlose Förderung von sehr unterschiedlichen Medien, einschließlich solcher, die wegen ihrer pastösen, pulvrigen oder abrasiven Eigenschaften von einem anderen Pumpensystem nur mit Schwierigkeiten gefördert werden können. Membranpumpen haben eine sehr hohe technische Zuverlässigkeit im rauhen Pumpenbetrieb. Der Vorteil derartiger Membranpumpen liegt ferner darin, daß sie keine rotierenden Teile und keine Wellenabdichtungen benötigen und völlig trockenlauffest sind. Durch Änderung der Luftmenge der zugeführten Betriebsdruckluft läßt sich die Pumpe auf einfache Weise regeln, ohne daß dazu teure oder komplizierte Reglerantriebe notwendig sind. Druckluftbetriebene Membranpumpen sind wegen ihrer vielen Vorteile bspw. in der Lebensmittelindustrie zur Förderung von Tomatenmark, Tiernahrung, Schokolademasse etc. oder in der Kosmetik zur Förderung von Zahnpasta oder Cremen im Einsatz; sie sind ebenso in den Bergwerken oder in der Bauindustrie zu finden zur Grubenentleerung, zur Wasserhaltung, zur Erzaufbereitung bzw. zur Förderung von Gipsschlämmen, Asbestzementschlämmen etc. wobei die hier aufgezählten Einsatzbereiche und die geförderten Medien nur beispielhaft erwähnt sein sollen.

Wesentlich für die technische Zuverlässigkeit und für die Regelbarkeit der Doppelmembranpumpen ist unter anderem das Luftsteuerventil, welches nach Maßgabe der Förderleistung die jeweiligen Kammern der Membranpumpe mit Druckluft beaufschlagt.

Eine druckluftbetriebene Doppelmembranpumpe ist aus der DE-OS 31 50 976 bekannt. Diese Doppelmembranpumpe besteht aus einem Pumpengehäuse mit zwei mit Abstand nebeneinander angeordneten Gehäusekammern, die jeweils eine Membraneinrichtung aufweisen und von dieser in eine Pumpenkammer und in eine Luftkammer aufgeteilt sind. Die Luftkammern der beiden Gehäusekammern sind zueinander ausgerichtet und weisen zwischen sich eine Druckluftumsteuereinrichtung auf. Die Druckluftumsteuereinrichtung führt den beiden Luftkammern die Druckluft zu und entlastet wechselweise die Luftkammern, wobei die Pumpenkammer über Ventileinrichtungen mit einem Saugstutzen und einem Druckstutzen in Verbindung stehen, über die das zu fördernde pastöse oder pulverförmige Gut in die Pumpenkammer aufgrund der durch die Druckluft erzeugten Membranbewegungen angesaugt bzw. aus der Pumpenkammer herausgedrückt wird. Die Druckluftumsteuereinrichtung besitzt einen Ventilsteuerkolben zur Umsteuerung der Luftkammerverbindungswege.

Der Ventilsteuerkolben verfügt über ein mechanisch arbeitendes Antriebssystem mit einem mechanischen Energiespeicher, wobei dieser von der Bewegung der Membraneinrichtungen ausgelöst wird. Der Energiespeicher wird von einer innerhalb des Ventilsteuerkolbens angeordneten Druckfeder gebildet. Die Druckfeder ist mechanisch mit einer federbelasteten Kugel gekoppelt, die den Steuerkolben in einer bestimmten Endstellung arretiert und diesen erst freigibt, wenn die Druckfeder von der Membraneinrichtung auf eine bestimmte potentielle Energie vorgespannt wurde. Mit dieser Konstruktion wird der Steuerkolben zwischen zwei stabilen Kolbenstellungen hin-und herbewegt, so daß insbesondere ein bisher als nachteilig empfundenes Hängenbleiben der Umsteuereinrichtung in einer undefinierten Zwischenstellung weitgehend vermieden wird.

Aus der DE-AS 27 26 674 ist eine druckgasbetätigte Doppelmembranpumpe mit zwei jeweils in einer Kammer angeordneten, die Kammer in eine Antriebs- und in eine Pumpkammer unterteilenden Membranen bekannte, welche durch eine starre Kopplung miteinander verbunden sind, die eine synchrone Bewegung beider Membranen bewirkt. Das Steuerventil enthält einen Kolbenschieber mit zwei Kugelsperren, wobei der Kolbenschieber mechanisch mit der starren Kopplung der Membranen verbunden ist. In den Endlagen des Kolbenschiebers wird ein Antriebsdruckgas jeweils abwechselnd der einen oder anderen Antriebskammer der Membranpumpe zugeleitet. Die mechanische Verbindung und der mechanische Antrieb zwischen der starren Kopplung der Membranen und dem Kolbenschieber des im Pumpengehäuse untergebrachten Steuerventils erfolgt durch eine Stabfeder mit rundem oder auch flachem Querschnitt. Die Stabfeder greift in eine Seitenöffnung der starren Kopplung der Membranen und in eine Öffnung des Kolbenschiebers ein und ist als Drehpunkt in einer Öffnung einer Rippe im Gehäuse gelagert. Wegen der kurzen mechanischen Kopplung zwischen der Membrankupplung und dem Kolbenschieber mit Hilfe der Stabfeder kann das Steuerventil im Pumpengehäuse angeordnet werden. Die Stabfeder wird dabei so dimensioniert, daß die Kugelsperren in der Endstellung des Steuerventils überwunden werden und damit eine Schnappschaltung für den Kolbenschieber entsteht.

Aus der DE-AS 1 453 607 ist eine hydraulisch betätigte Doppelmembranpumpe mit zwei jeweils in einer Kammer angeordneten, die Kammer in eine Pump- und eine Antriebskammer unterteilenden Membranen bekannt. Die Membranen sind durch eine starre Kopplung miteinander verbunden, die eine synchrone Bewegung beider Membranen bewirken. Die Pumpe ist ferner mit einem als Kolbenschieber ausgebildeten Steuerventil verbunden, das mechanisch mit der starren Kopplung der Membranen verbunden ist und dadurch in den Endlagen der Hubstellungen der Membranen eine Antriebsflüssigkeit jeweils abwechselnd der einen oder der anderen Antriebskammer zuleitet. Die mechanische Verbindung zwischen der starren Membrankopplung und dem Steuerventil wird über einen an der starren Kopplung befestigten Arm hergestellt, der gleitend auf einer mit dem Kolbenschieber verbundenen Betätigungsstange geführt ist. Zu beiden Seiten des Armes ist eine Feder angeordnet, deren Federhub so bemessen ist, daß beide Federn ständig mit dem Arm in Wirkverbindung stehen. Der Steuerkolben des Steuerventils enthält zwei Kugelsperren als Rastvorrichtung, welche bei einer bestimmten, durch eine der beiden Federn ausgeübten Kraft gelöst werden und eine Umschaltung des Ventils bewirken. Hierdurch wird eine Membranbewegung bis zu einem gewünschten Punkt erreicht, wo die Membranbewegung rasch unterbrochen und der Gegenhub eingeleitet wird.

Den oben beschriebenen Doppelmembranpumpen ist gemeinsam, daß die Bewegung des Ventilsteuerkolbens mechanisch von den starr miteinander gekoppelten Membranen gesteuert wird und daß durch Ausnutzung von potentieller Federenergie eine Schnappvorrichtung gebildet wird, die den Steuerkolben des Ventils zwischen zwei Endstellungen hin- und herbewegt. Den Steuerventilen ist allerdings auch der hohe konstruktive Aufwand gemeinsam sowie der Umstand, daß bei sehr geringer Pumpenleistung das Steuerventil zum Hängenbleiben in einer Zwischenstellung neigt und bei sehr hoher Pumpenleistung infolge eines sogenannten Flatterns des Federmechanismus keine genaue Ventilsteuerung möglich ist.

Durch die US-A-4 381 180 ist eine druckluftbetriebene Doppelmembranpumpe der eingangs spezifizierten Gattung bekannt, welche ein Luftsteuerventil mit einem Steuerkolben in einem Steuerzylinder mit Zuluftbohrungen und Abluftbohrungen für die Druckluft aufweist, wobei der Steuerkolben durch ein Steuermedium, vorzugsweise Steuerluft zwischen zwei Endstellungen bewegt wird, wobei die Steuerluft dem Steuerzylinder über Pilotventile zugeführt wird, von denen jedes jeweils nur in einer Extremstellung der Pumpenmembranen betätigt wird und wobei der Steuerkolben in jeder seiner beiden Endstellungen einer durch das Steuermedium zu überwindenden Haltekraft ausgesetzt ist.

Bei dem Luftsteuerventil dieser bekannten Doppelmembranpumpe wird die in den beiden Endstellungen des Steuerkolbens auf diesen einwirkende und durch das Steuermedium zu überwindende Haltekraft durch ein und dieselbe mechanische Rastvorrichtung hervorgebracht. Dabei ist diese mechanische Rastvorrichtung nur einem Ende des Steuerkolbens zugeordnet, und zwar derart, daß sie abwechselnd mit zwei verschiedenen Rasteingriffen am Steuerkolben in Eingriff gelangt, die voneinander einen dem Hubweg des Steuerkolbens entsprechenden Abstand haben.

Es ist ohne weiteres verständlich, daß mit der nur einseitigen Anordnung bzw. Wirkung der Rastvorrichtungen eine Beeinträchtigung der Arbeitsweise des Luftsteuerventils einhergeht. Die sehr unterschiedlichen Abstände zwischen der jeweils wirksamen Rastvorrichtung und der jeweils mit Steuerluftdruck beaufschlagten Kolbenfläche führen naturgemäß zu einer unterschiedlichen Gängigkeit des Steuerkolbens innerhalb des Zylinderraums des Luftsteuerventils und haben damit entsprechende Rückwirkungen auf die Arbeitsweise der Doppelmembranpumpe, welche sich in einem ungleichmäßigem Arbeitsrythmus bemerkbar machen können. Das gilt insbesondere dann, wenn die Membranpumpe unter extremen Betriebsbedingungen laufen soll, bspw. wenn sie sehr langsam und/oder mit sehr hoher Leistung gefahren werden muß.

Es ist zwar durch die CH-A-458 860 schon ein Mehrweg-Steuerventil für den Betrieb eines pneumatisch oder hydraulisch betätigbaren Osszilators bekannt, dessen Steuerkolben innerhalb des Zylinderraums in jeder seiner beiden möglichen Endstellungen mit einer besonderen Haltevorrichtung zusammenarbeitet, wobei die beiden Haltevorrichtungen absolut symmetrisch gestaltet und angeordnet sind.

In diesem Falle sind dabei die Haltevorrichtungen so angeordnet, daß sie ihre Haltekraft jeweils auf der Gegenseite der beaufschlagten Kolbenfläche entfalten.

Nachteilig bei diesem bekannten Mehrweg-Steuerventil ist jedoch, daß auf den Steuerkolben nach Überwindung der Haltekraft der jeweils wirksamen Haltevorrichtung über den gesamten Stellweg hinweg von beiden Haltevorrichtungen Bremskräfte ausgeübt werden, welche die Beweglichkeit des Steuerkolbens beeinträchtigten können.

Die Aufgabe der vorliegenden Erfindung besteht darin, die Steuerung und den Steuermechanismus des Luftsteuerventils für eine druckluftbetriebene Doppelmembranpumpe konstruktiv zu vereinfachen und die Bewegung des Steuerkolbens ohne mechanische Kopplung mit der Pumpenmembran zu steuern, damit auch in extremen Betriebsbedingungen der Membranpumpe, bspw. wenn die Pumpe sehr langsam oder mit sehr hoher Leistung fahren wird, ein sicheres und exaktes Umschalten des Steuerventils gewährleistet wird.

Diese Aufgabe wird verfahrenstechnisch dadurch gelöst, daß die Haltekraft in jeder der beiden Endstellungen des Steuerkolbens unmittelbar an oder in der Nähe seiner jeweils druckbeaufschlagten Kolbenfläche innerhalb des Steuerzylinders gegen den Druck der Steuerluft vor der den Steuerluftanschluß enthaltenden Zylinderstirnfläche während einer vorgegebenen Zeitdauer bzw. bis zu einem Gegendruck mit vorgegebener Druckhöhe ausgeübt wird, und daß dabei die auf den Steuerkolben innerhalb des Steuerzylinders durch die Druckbeaufschlagung einwirkende Stellkraft unabhängig bzw. entkoppelt von der Bewegung der Pumpenmembranen bis auf den die Haltekraft überschreitenden Wert erhöht wird. Konstruktiv wird die Aufgabe dadurch gelöst, daß am Steuerzylinder des Luftsteuerventils separate Anschlüsse für ein Steuermedium, vorzugsweise für Steuerluft zum Verstellen des Steuerkolbens vorgesehen sind sowie je eine von der Pumpenmembran entkoppelt betriebenen Haltevorrichtung, die in Wirkverbindung mit dem Steuerkolben steht, wobei die Haltevorrichtung dem Druck der Steuerluft zumindest während einer definierten Zeit und/oder bis zu einem definierten Druck entgegenwirkt.

Die erfindungsgemäße Lösung hat den Vorteil, daß auf die komplizierte, teure und anfällige Feinwerktechnik bisher bekannter Ventilkonstruktionen verzichtet werden kann. Die Steuerung des Ventils kann von der Bewegung der Pumpenmembranen weitgehend entkoppelt werden, so daß eine bessere Anpassung der Ventilsteuerung an die jeweiligen Betriebspunkte der Pumpe ermöglicht wird. Insbesondere kann bei sehr langsamer Pumpenfahrweise durch genau dosierte Zuführung der Steuerluft in Verbindung mit der eingestellten Haltezeit der Haltevorrichtung bzw. in Verbindung mit dem eingestellten Gegendruck der Haltevorrichtung die Umsteuerung des Ventils so lange verzögert werden, bis die jeweilige Membrankammer der Pumpe vollständig mit der Arbeitsdurckluft gefüllt ist. Wird dann durch gezielte Zuführung von Steuerluft die Haltekraft der Haltevorrichtung überwunden, ist die yon der Steuerluft auf den Steuerkolben ausgeübte Schubkraft auf Werte einstellbar, die immer größer als die im Ventil auftretenden Reibungskräfte sind. Ein Hängenbleiben des Steuerkolbens in einer Mittelstellung und ein davon ausgelöster Pumpenstillstand wird mit Sicherheit vermieden. Die erfindungsgemäßen Maßnahmen ermöglichen auch bei sehr hoher Pumpenleistung eine außerordentlich exakte Steuerung des Ventils, so daß die beiden Luftkammern der Membranpumpe auch bei wechselnden und extrem hohen Fördermengen und Förderhöhen mit der abverlangten Arbeitsdruckluft optimal versorgt sind.

In Weiterbildung der Erfindung wird vorgeschlagen, daß die Haltezeit oder der Gegendruck der Haltevorrichtung variabel einstellbar ist, so daß mit diesen Maßnahmen noch besser die Betriebsbedingungen der Pumpe und die Reibungsverhältnisse im Ventil berücksichtigt werden können.

Nach einer besonders vorteilhaften Ausgestaltung der Erfindung wird in jeder End- bzw. Umsteuerstelluhg des Steuerkolbens mindestens ein Permanentmagnet als Haltevorrichtung angeordnet. Hierdurch wird eine besonders einfache Konstruktion für die verzögernde Arretierung des Steuerkolbens in seiner jeweiligen Endstellung geschaffen. Zweckmäßig ist auch, daß bspw. ein Permanentmagnet mit der Steuerfläche des Kolbens und der andere Permanentmagnet mit der stirnseitigen Innenfläche des Steuerzylinders verbunden ist, wenn bspw. das Zylindergehäuse aus einem Kunststoff gefertigt ist.

In einer weiteren Ausgestaltung der Erfindung wird vorgeschlagen, daß in jeder End- bzw. Umsteuerstellung des Steuerkolbens eine elektromagnetische Haltevorrichtung angeordnet ist, die vorzugsweise aus einer in oder an dem Steuerzylinder eingelassenen stromdurchflossenen Spule besteht, die mit einem am Steuerkolben eingelassenen ferromagnetischen Ring magnetisch zusammenwirkt. Durch diese Maßnahmen wird die Haltezeit bzw. der Gegendruck der Haltevorrichtung in weiten Bereichen variabel und regelbar. Die Funktion des Steuerventils ist auf diese Weise optimal auf die Betriebsbedingungen der Membranpumpe anpaßbar, insbesondere dann, wenn nach einem weiteren Vorschlag der Erfindung der magnetische Fluß der Spule mittels einer freiprogrammierbaren Regeleinrichtung veränderbar ist.

Eine bevorzugte und konstruktiv besonders kostengünstige Ausbildung des Luftsteuerventils sieht vor, daß der Steuerkolben aus einer Kolbenstange mit einem mittleren Führungskolben und zwei äußeren Kolbenflächen mit dazwischenliegenden Ringräumen besteht, daß der Steuerkolben von dem Steuerzylinder umschlossen ist, daß die stirnseitigen Flächen des Steuerzylinders die Anschlüsse für die Steuerluft aufnehmen, die ihrerseits mit Magnetventilen verbunden sind, daß der Druckluftanschluß am Außenumfang des Steuerzylinders angeordnet ist und daß zwei zu der Doppelmembranpumpe führende Druckluftableitungen am Außenumfang des Steuerzylinders angeordnet sind und daß der Steuerkolben so bewegbar ist, daß mittels der Ringräume jeweils eine Druckluftleitung und eine Druckluftableitung miteinander verbindbar sind und daß zumindest ein Permanentmagnet jeweils auf der mit der Steuerluft beaufschlagten Kolbenfläche angeordnet ist.

Die Erfindung wird anhand eines Ausführungsbeispiels näher beschrieben. Es zeigen:
- Figur 1: in einer Schnittansicht eine druckluftbetriebene Doppelmembranpumpe bekannter Bauart,
- Figur 2: das Steuerventil der Doppelmembranpumpe in schematischer Darstellung mit Permanentmagneten als Haltevorrichtung,
- Figur 3: das Steuerventil mit einer elektromagnetischen Haltevorrichtung in vergrößerter Darstellung,
- Figur 4: das Steuerventil mit einem elastischen Lippenring als Haltevorrichtung in vergrößerter Darstellung.

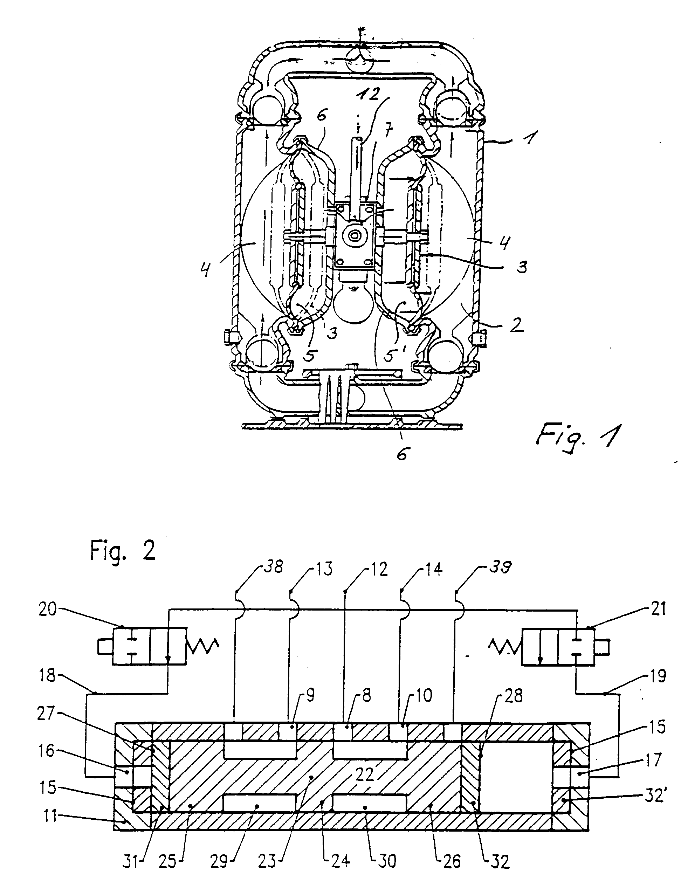

In Fig. 1 ist in einer schematisierten Schnittansicht eine druckluftbetriebene Doppelmembranpumpe dargestellt. Die Doppelmembranpumpe besteht aus einem Pumpengehäuse 1 mit zwei im Abstand nebeneinander angeordneten Gehäusekammern 2, die jeweils eine Membran 3 aufweisen und von dieser in eine Pumpenkammer 4 und in eine Luftkammer 5 aufgeteilt sind. Die beiden Luftkammern 5, 5′ stehen sich gegenüber und zwischen den Außenwänden 6 der Luftkammern 5, 5′ ist ein Druckluftumsteuerventil 7 mit einer Druckluftzuleitung 12 angeordnet, welches die Arbeitsdruckluft auf die beiden Luftkammern 5, 5′ aufteilt.

In Fig. 2 ist das erfindungsgemäße Luftsteuerventil schematisch dargestellt. Es besteht aus einem Steuerzylinder 11 mit einem am Außenumfang des Steuerzylinders angeordneten Druckluftanschluß 8 mit einer Druckluftzuleitung 12 und mit zwei ebenfalls am Außenumfang angeordneten Abluftbohrungen 9, 10 mit Druckluftableitungen 13, 14, die zu der linken bzw. rechten Luftkammer 5, 5′ der Membranpumpe führen. An den stirnseitigen Flächen 15 des Steuerzylinders 11 sind Anschlüsse 16, 17 für die Steuerluft vorgesehen, die über eine Zuluftleitung 18, 19 mit einem Pilotventil 20, 21 verbunden sind.

Der Steuerkolben 22 im Steuerzylinder 11 besteht aus einer Kolbenstange 23 mit einem mittleren Führungskolben 24 und zwei äußeren Kolben 25, 26 mit Kolbenflächen 27, 28. Zwischen den äußeren Kolbenflächen und dem mittleren Führungskolben bestehen zwei Ringräume 29, 30. Aus der zeichnerischen Darstellung ist erkennbar, daß der Druckluftanschluß 8 über den Ringraum 30 mit der Druckluftableitung 14 zur Luftkammer 5′ der Membranpumpe verbunden ist, wenn der Steuerkolben 22 im Steuerzylinder 11 in der linken Endstellung steht. Es ist auch ohne weiteres erkennbar, daß in der rechten Endstellung des Steuerkolbens 22 der Druckluftanschluß 8 über den zweiten Ringraum 29 mit der Druckluftableitung 13 verbunden ist, die zur Luftkammer 5 der Membranpumpe führt. Auf der jeweils mit Steuerluft beaufschlagten Kolbenfläche des Steuerkolbens 27, 28 ist ein Permanentmagnet 31, 32 angeordnet, der mit dem Zylindergehäuse 11 aus einem magnetisierbaren Material magnetisch zusammenwirkt. Ferner weist der Steuerzylinder 11 die beiden entlastenden Abluftleitungen 38, 39 auf.

Wird nun das Pilotventil 20 angesteuert und für die Steuerluft geöffnet, wird die Kolbenfläche 27 des Steuerkolbens 22 so lange druckbeaufschlagt, bis die magnetische Kraft zwischen Kolbenfläche 27 und stirnseitiger Fläche 15 des Steuerzylinders überwunden ist und der Kolben von der Steuerluft derart beschleunigt wird, daß er schlagartig in die andere Endstellung bewegt wird. Infolge des hohen Bewegungsimpulses werden in jedem Fall die Reibungskräfte zwischen Kolben und Zylinder überwunden und der Steuerkolben wird keine Zwischenstellung im Steuerzylinder annehmen. Der Steuerkolben 22 wird anschließend in seiner anderen Endstellung mit Hilfe des Permanentmagneten 32 fest arretiert. Wird nun durch Ansteuerung des Pilotventils 21 die Kolbenfläche 28 des Steuerkolbens mit Steuerluft beaufschlagt, wird der Kolben von dem Permanentmagneten 32 zunächst in seiner Stellung während einer bestimmten Zeitspanne gehalten bis der Druck der Steuerluft auch hier die magnetischen Kräfte überwindet, so daß der Steuerkolben schlagartig in seine erste Endstellung zurückbewegt wird und dort von dem Permanentmagnet 31 arretiert wird. Dieser Bewegungsimpuls ist so hoch, daß die Reibungskräfte zwischen Steuerkolben und Steuerzylinder in jedem Fall überwunden werden. Der Steuerkolben wird also zwischen zwei definierten Endstellungen sehr schnell und sehr exakt hin- und herbewegt, so daß eine sehr genaue Füllung der Luftkammern 5, 5′ der Mambranpumpe mit Arbeitsdruckluft auch dann gewährleistet ist, wenn die Membranpumpe unter extremen Betriebsbedingungen arbeitet, bspw. sehr langsam gefahren wird oder sehr hohe Förderleistungen erbringen muß.

Sollte aus bestimmten Gründen der Steuerzylinder 11 aus einem Kunststoff bestehen, so ist es zweckmäßig, daß ein Permanentmagnet mit der Steuerfläche des Kolbens und ein anderer Permanentmagnet 32′ mit der stirnseitigen Innenfläche 15 des Steuerzylinders verbunden ist. Hierdurch ist eine Haltevorrichtung geschaffen, die die gleichen vorteilhaften Eigenschaften besitzt, wie die oben beschriebene Haltevorrichtung, bei der der Steuerzylinder 11 aus einem metallischen Werkstoff besteht.

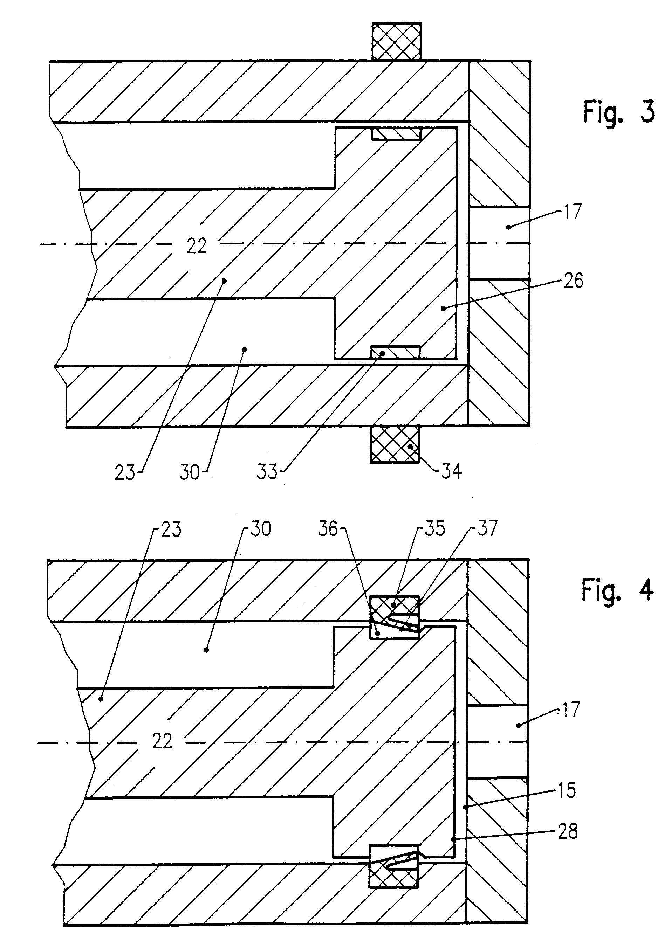

Fig. 3 zeigt eine elektromagnetische Haltevorrichtung mit einem am Steuerkolben 22 eingelassenen ferromagnetischen Ring 33 und einer am Steuerzylinder 11 angeordneten stromdurchflossenen Spule 34, deren magnetischer Fluß mit Hilfe einer nicht näher dargestellten jedoch mit üblichen Bauteilen ausgestatteten Regelvorrichtung veränderbar ist. Die dem Druck der Steuerluft entgegenwirkende Haltekraft dieser Haltevorrichtung ist der Zeit und der Größe nach in Abhängigkeit von der Pumpenfahrweise frei einstellbar, so daß eine hervorragend genaue Steuerung des Ventils und damit eine optimale Zuführung der Arbeitsdruckluft in die Luftkammern 5, 5′ der Pumpe gewährleistet ist. Bei einem Steuerzylinder aus ferromagnetischem Werkstoff sollte die stromdurchflossene Spule in der Zylinderwandung so angeordnet sein, daß die Wirbelstromverluste möglichst klein bleiben.

Fig. 4 zeigt eine Haltevorrichtung für den Steuerkolben 22, die aus einem elastischen Lippenring 35 im Steuerzylinder besteht, der mit einer entsprechend ausgebildeten Ringnut 36 am Kolbenumfang zusammenwirkt. Diese Haltevorrichtung genügt ebenfalls sehr zuverlässig den aufgabegemäß vorgegebenen Bedingungen, nämlich die Bewegung des Steuerkolbens trotz der Beaufschlagung mit Steuerluft zunächst zu verhindern und den Kolben erst dann freizugeben, wenn die Steuerluft einen bestimmten Druck erreicht hat. Der Steuerkolben wird dann -wie zuvor beschrieben - sehr schnell und mit großer Sicherheit von der leicht expandierenden Steuerluft in die andere Endstellung bewegt. Der Lippenring 35 sollte entsprechend der schematischen Zeichnung vorteilhafterweise so ausgebildet sein, daß die elastische Lippe 37 dem Steuerkolben bei seiner Bewegung in die Endstellung nur einen geringen Widerstand bietet; bei der Bewegung des Steuerkolbens aus seiner Endstellung heraus muß die elastische Lippe 37 jedoch die entsprechenden Haltekräfte dem Druck der Steuerluft entgegensetzen. Dies läßt sich durch eine eine entsprechende Anfasung von Kolbenfläche und Ringnut bewirken.

Der Gegenstand der Erfindung ist verständlicherweise nicht auf die Ausführungsbeispiele beschränkt, sondern umfaßt auch solche weiteren Ausbildungen, die den beanspruchten Maßnahmen genügen.

## Patentansprüche

1. Verfahren zur Steuerung der Bewegung des Steuerkolbens (22) eines Luftsteuerventils für eine druckluftbetriebene Doppelmembranpumpe, wobei der Steuerkolben (22) in einem Steuerzylinder (11) mit Zuluftbohrungen (16 und 17) und Abluftbohrungen (38 und 39) für die Druckluft durch ein Steuermedium, vorzugsweise Steuerluft, zwischen zwei Endstellungen bewegt wird, wobei die Steuerluft dem Steuerzylinder (11) über Pilotventile (20 und 21) zugeführt wird, von denen jedes jeweils nur in einer Extremstellung der Pumpenmembranen (3) betätigt wird, und wobei der Steuerkolben (22) in jeder seiner beiden Endstellungen einer durch das Steuermedium zu überwindenden Haltekraft (31 und 32, 32'; 33, 34; 35, 36) ausgesetzt wird,
**dadurch gekennzeichnet,**
daß die Haltekraft (31 und 32, 32'; 33, 34; 35, 36) in jeder der beiden Endstellungen des Steuerkolbens (22) unmittelbar an oder in der Nähe seiner jeweils druckbeaufschlagten Kolbenfläche (27 bzw. 28) innerhalb des Steuerzylinders (11) gegen den Druck der Steuerluft vor der den Steuerluftanschluß (16 bzw. 17) enthaltenden Zylinderstirnfläche (15) während einer vorgegebenen Zeitdauer bzw. bis zu einem Gegendruck mit vorgegebener Druckhöhe ausgeübt wird, und daß dabei die auf den Steuerkolben (22) innerhalb des Steuerzylinders (11) durch die Druckbeaufschlagung einwirkende Stellkraft unabhängig bzw. entkoppelt von der Bewegung der Pumpenmembranen (3) bis auf den die Haltekraft überschreitenden Wert erhöht wird.

2. Verfahren nach Anspruch 1,
**dadurch gekennzeichnet,**
daß die Haltezeit der Haltevorrichtung variabel einstellbar ist.

3. Verfahren nach Anspruch 1,
**dadurch gekennzeichnet,**
daß der Gegendruck der Haltevorrichtung variabel einstellbar ist.

4. Luftsteuerventil für eine druckluftbetriebene Doppelmembranpumpe zur Durchführung des Steuerverfahrens nach den Ansprüchen 1 bis 3, mit einem in einem Steuerzylinder (11) beweglich zwischen zwei Endstellungen angeordneten Steuerkolben (22) und mit Zuluft- (8) und Abluftbohrungen (9, 10) für die Druckluft,
**gekennzeichnet durch**
Anschlüsse (16, 17) für ein Steuermedium, vorzugsweise für Steuerluft zum Verstellen des Steuerkolbens (22) und durch Anordnung je einer von der Pumpenmembran (4) entkoppelt betriebenen, in Wirkverbindung mit dem Steuerkolben (22) stehenden Haltevorrichtung (31, 32; 33, 34; 35, 36), welche dem Druck der Steuerluft zumindest während einer definierten Zeit und/oder bis zu einem definierten Druck entgegenwirkt.

5. Luftsteuerventil nach Anspruch 4,
**dadurch gekennzeichnet,**
daß in jeder End- bzw. Umsteuerstellung des Steuerkolbens (22) mindestens ein Permanentmagnet (31, 32) als Haltevorrichtung angeordnet ist.

6. Luftsteuerventil nach Anspruch 4 oder 5,
**dadurch gekennzeichnet,**
daß ein Permanentmagnet (31, 32) mit der Steuerfläche (27, 28) des Kolbens (22) und der andere Permanentmagnet (32') mit der stirnseitigen Innenfläche (15) des Steuerzylinders (11) verbunden ist.

7. Luftsteuerventil nach Anspruch 4,
**dadurch gekennzeichnet,**
daß in jeder End- bzw. Umsteuerstellung des Steuerkolbens (22) eine elektromagnetische Haltevorrichtung angeordnet ist, die vorzugsweise aus einer in oder an dem Steuerzylinder (11) eingelassenen stromdurchflossenen Spule (34) besteht, die mit einem am Steuerkolben (22) eingelassenen ferromagnetischen Ring (33) magnetisch zusammenwirkt.

8. Luftsteuerventil nach Anspruch 7,
**dadurch gekennzeichnet,**
daß die Spule (34) mit einer den magnetischen Fluß verändernden, vorzugsweise frei programmierbaren Regeleinrichtung verbunden ist.

9. Luftsteuerventil nach Anspruch 4,
**dadurch gekennzeichnet,**
daß in jeder End- bzw. Umsteuerstellung des Steuerkolbens (22) eine elastische Haltevorrichtung angeordnet ist, die vorzugsweise aus einem elastischen Lippenring (35) im Steuerzylinder (11) besteht, der mit einer entsprechend ausgebildeten Ringnut (36) am Kolbenumfang zusammenwirkt.

10. Luftsteuerventil nach Anspruch 4 und 5,
**dadurch gekennzeichnet,**
daß der Steuerkolben (22) aus einer Kolbenstange (23) mit einem mittleren Führungskolben (24) und zwei äußeren Kolbenflächen (27, 28) mit dazwischenliegenden Ringräumen (29, 30) besteht, daß der Steuerkolben (22) von dem Steuerzylinder (11) umschlossen ist, daß die stirnseitigen Flächen (15) des Steuerzylinders (11) die Anschlüsse (16, 17) für die Steuerluft aufnehmen, die ihrerseits mit Magnetventilen (20, 21) verbunden sind, daß der Druckluftanschluß (8) am Außenumfang des Steuerzylinders (11) angeordnet ist und daß zwei zu der Doppelmebranpumpe führende Druckluftableitungen (13, 14) am Außenumfang des Steuerzylinders (11) angeordnet sind und daß der Steuerkolben (22) so bewegbar ist, daß mittels der Ringräume (29, 30) jeweils eine Druckluftzuleitung (12) und eine Druckluftableitung (13, 14) miteinander verbindbar sind und daß zumindest ein Permanentmagnet (31, 32) jeweils auf der mit Steuerluft beaufschlagten Kolbenfläche (27, 28) angeordnet ist.

## Claims

1. A process for controlling the movement of the control piston (22) of an air control valve for a double-diaphragm pump operated by compressed air, whereby the control piston (22) in a master cylinder (11) having inlet bores (16 and 17) and outlet bores (38 and 39) for the compressed air is moved by a control medium, preferably control air, between two end positions, whereby the control air is supplied to the master cylinder (11) via pilot valves (20 and 21), each of which is operated only in an extreme position of the pump diaphragms (3), and whereby in each of its end positions the control piston (22) is subject to a retention force (31 and 32, 32'; 33, 34; 35, 36) to be overcome by the control medium,
**characterised in that** the retention force (31 and 32, 32'; 33, 34; 35, 36) in each of the two end positions of the control piston (22) directly at or in the vicinity of its respectively pressurised piston face (27 and 28) inside the master cylinder (11) is exerted against the pressure of the control air in front of the cylinder end face (15) containing the control air port (16 and 17) for a predetermined period or time and respectively until a counter-pressure having a predetermined pressure level is achieved,
**and in that** the regulating force acting on the control piston (22) inside the master cylinder (11) by pressurisation is increased independently of or not interacting with the movement of the pump diaphragms (3) until the value exceeding the retention force is reached.

2. A process according to Claim 1,
**characterised in that** the retention time of the retention device is variably adjustable.

3. A process according to Claim 1,
**characterised in that** the counter-pressure of the retention device is variably adjustable.

4. An air control valve for a double-diaphragm pump operated by compressed air for performing the control process according to Claims 1 to 3, having a control piston (22) movably disposed in a master cylinder (11) between two end positions and having incoming air apertures (8) and outgoing air apertures (9, 10) for the compressed air,
**characterised by** ports (16, 17) for a control medium, preferably for control air, to regulate the control piston (22) and by disposing one retention device each (31, 32; 33, 34; 35, 36) operated so independently of the pump diaphragm (4) and in operative connection with the control piston (22), which device acts against the pressure of the control air at least during a defined period of time and/or until a defined pressure is reached.

5. An air control valve according to Claim 4,
**characterised in that** at least one permanent magnet (31, 32) is disposed as a retention device in each end or reversing position of the control piston (22).

6. An air control valve according to Claim 4 or 5,
**characterised in that** one permanent magnet (31, 32) is connected to the control face (27, 28) of the piston (22) and the other permanent magnet (32') is connected to the end inner face (15) of the master cylinder (11).

7. An air control valve according to Claim 4,
**characterised in that** in each end and reversing position respectively of the control piston (22) is disposed an electromagnetic retention device, which preferably consists of a coil (34) through which current flows and which is mounted in or on the master cylinder (11), and which magnetically cooperates with a ferromagnetic ring (33) mounted on the control piston (22).

8. An air control valve according to Claim 7,
**characterised in that** the coil (34) is connected to a control unit which alters the magnetic flux and is preferably freely programmable.

9. An air control valve according to Claim 4,
**characterised in that** in each end and reversing position respectively of the control piston (22) is disposed an elastic retention device, which preferably consists of an elastic lip ring (35) in the master cylinder (11), which cooperates with an appropriately constructed annular groove (36) on the periphery of the piston.

10. An air control valve according to Claim 4 and 5,
**characterised in that** the control piston (22) consists of a piston rod (23) having a central guide piston (24) and two outer piston faces (27, 28) with annular spaces (29, 30) therebetween,
**in that** the control piston (22) is surrounded by the master cylinder (11),
**in that** the end faces (15) of the master cylinder (11) contain the ports (16, 17) for the control air, which in turn are connected to solenoid valves (20, 21,)
**in that** the compressed air port (8) is disposed on the outer circumference of the master cylinder (11),
**and in that** two compressed air delivery lines (13, 14) leading to the double-diaphragm pump are disposed on the outer circumference of the master cylinder (11),
**and in that** the control piston (22) can be moved so that a compressed air supply line (12) and a compressed air delivery line (13, 14) can be connected to one another by means of the annular spaces (29, 30),
**and in that** at least one permanent magnet (31, 32) is disposed on the piston face (27, 28) supplied with control air.

## Revendications

1. Procédé pour commander le mouvement du piston (22) d'un soupape à air pour une pompe à double membrane actionnée par l'air comprimé, le piston (22) se déplaçant, dans un cylindre (11) qui comporte des trous d'entrée (16 et 17) et d'évacuation (38 et 39) d'air pour l'air comprimé, entre deux positions extrêmes grâce à un agent de réglage, de préférence de l'air de réglage, l'air de réglage étant introduit dans le cylindre (11) via des soupapes pilote (20 et 21) qui ne sont actionnées chacune que dans une position extrême des membranes (3) de la pompe et le piston (22) étant soumis à une force de maintien (31 et 32, 32'; 33, 34; 35, 36) à vaincre appliquée par l'agent de réglage dans chacune des positions extrêmes, caractérisé en ce que la force de maintien (31 et 32, 32'; 33, 34; 35, 36), dans les deux positions extrêmes du piston (22), est exercée directement sur ou près de chaque surface (27 ou 28) du piston soumise à la pression, à l'intérieur du cylindre (11), contre la pression exercée par l'air de réglage devant la surface du cylindre (15) contenant le raccord (16 ou 17) pour l'air de réglage, pendant un certain laps de temps ou jusqu'à ce qu'une contre-pression d'une hauteur manométrique définie soit exercée et en ce que la puissance de réglage s'exerçant, par l'alimentation de la pression, sur le piston (22) à l'intérieur du cylindre (11) est augmentée à une valeur dépassant la force de maintien indépendamment ou de manière découplée du mouvement des membranes (3) de la pompe.

2. Procédé selon la revendication 1, caractérisé en ce que le temps de maintien du dispositif de maintien peut être réglé de manière variable.

3. Procédé selon la revendication 1, caractérisé en ce que la contre-pression du dispositif de maintien peut être réglée de manière variable.

4. Soupape à air pour une pompe à double membrane actionnée par l'air comprimé pour la réalisation du procédé de commande selon les revendications 1 à 3, présentant un piston (22) disposé de manière mobile entre deux positions extrêmes dans un cylindre (11) ainsi que des trous d'alimentation (8) et d'évacuation (9, 10) pour l'air comprimé, caractérisée par des raccords (16, 17) pour un agent de réglage, de préférence de l'air de réglage, de manière à pouvoir déplacer le piston (22) ainsi que par un dispositif de maintien (31, 32; 33, 34; 35, 36) fonctionnant de manière découplée de la membrane (4) de la pompe, ledit dispositif étant couplé de manière active avec le piston (22) et agissant contre la pression de l'air de réglage au moins pendant un laps de temps défini et/ou jusqu'à une pression définie.

5. Soupape à air selon la revendication 4, caractérisée en ce qu'on dispose à chaque position extrême ou d'inversion du piston (22) au moins un aimant permanent (31, 32) comme dispositif de maintien.

6. Soupape à air selon la revendication 4 ou 5, caractérisée en ce qu'un aimant permanent (31, 32) est relié à la surface (27, 28) du piston (22) et en ce que l'autre aimant permanent (32') est relié à la face frontale intérieure (15) du cylindre (11).

7. Soupape à air selon la revendication 4, caractérisée en ce qu'on dispose à chaque position extrême ou d'inversion du piston (22) un dispositif de maintien électromagnétique qui est de préférence formé par une bobine (34) traversée par du courant, encastrée dans ou sur le cylindre (11), ladite bobine ayant une interaction magnétique avec un anneau ferromagnétique (33) encastré sur le piston (22).

8. Soupape à air selon la revendication 7, caractérisée en ce que la bobine (34) est reliée à un dispositif de réglage permettant de modifier le flux magnétique, ledit dispositif pouvant de préférence être programmé librement.

9. Soupape à air selon la revendication 4, caractérisée en ce qu'un dispositif de maintien élastique est disposé à chaque position extrême du piston (22), ledit dispositif étant de préférence constitué par un anneau à lèvres (35) élastique dans le cylindre (11), interagissant avec une rainure annulaire (36) correspondante située sur le périmètre du piston.

10. Soupape à air selon les revendications 4 et 5, caractérisée en ce que le piston (22) est constitué par une tige (23) de piston présentant un piston de guidage (24) médian et deux surfaces extérieures (27, 28) de piston en formant des espaces annulaires (29, 30), en ce que le piston (22) est entouré par le cylindre (11), en ce que les faces frontales (15) du cylindre (11) comprennent les raccords (16, 17) pour l'air de réglage qui sont eux-mêmes reliés à des soupapes magnétiques (20, 21), en ce que le raccord (8) pour l'air comprimé est disposé dans le périmètre externe du cylindre (11) et en ce que deux tuyauteries (13, 14) d'air comprimé qui conduisent vers la pompe à double membrane sont disposées sur le périmètre externe du cylindre (11) et en ce que le piston (22) peut être déplacé de telle manière qu'une tuyauterie d'alimentation (12) d'air comprimé et une tuyauterie d'évacuation (13, 14) d'air comprimé sont chaque fois reliées l'une à l'autre via les espaces annulaires (29, 30) et en ce qu'au moins un aimant permanent (31, 32) est chaque fois disposé sur chaque surface (27, 28) du piston soumise à l'air de réglage.
